# EUROPEAN PATENT APPLICATION

(11) **EP 4 822 965 A1**
(43) Date of publication of application: **14.10.2026**
(21) Application number: 24901142.0
(22) Date of filing: 06.12.2024
(51) Int. Cl.: H02M 1/00, H02M 3/28, H02M 3/335

(54) **POWER CONVERSION DEVICE**

(30) Priority: 07.12.2023 KR 20230177147
(71) Applicant: LG Innotek Co., Ltd., Seoul 07796 (KR)
(72) Inventor: YOON, Dong Keun, Seoul 07796 (KR); LEE, Seung Min, Seoul 07796 (KR); JUNG, Kwang Soon, Seoul 07796 (KR)
(74) Representative: Plasseraud IP
(86) International application number: PCT/KR2024/019993
(87) International publication number: WO 2025/121956

(57) **Abstract**

A power conversion device according to one embodiment of the present invention comprises: a plurality of power conversion units connected in parallel, each including a switching unit; and a control unit for controlling the plurality of power conversion units through pulse width modulation (PWM), wherein the control unit individually controls the pulse width of output signals of the switching unit of each of the plurality of power conversion units.

## Description

### [Technical Field]

The present invention relates to a power conversion device, and more specifically, to a power conversion device capable of balancing outputs between a plurality of power conversion units and reducing ripples.

### [Background Art]

A rapid charger for charging an electric vehicle configures power modules with a capacity of tens of kW in parallel and outputs a large capacity of power in order to support high-speed charging of several hundred kW. When connected to the electric vehicle, the power module receives AC power from a grid and outputs DC power for charging a battery of the electric vehicle.

Rapid chargers output a large capacity by using a plurality of power modules. At this time, resonance inductors or resonance capacitors of a resonance circuit inside the power modules may have tolerances for each power module, and due to this, there is a problem in that output power varies between the power modules.

### [Detailed Description of the Invention]

### [Technical Subject]

The technical problem to be solved by the present invention is to provide a power conversion device capable of balancing outputs between a plurality of power conversion units and reducing ripples.

### [Technical Solution]

In order to solve the above technical problem, a power conversion device according to one embodiment of the present invention comprises: a plurality of power conversion units connected in parallel, each including a switching unit; and a control unit for controlling the plurality of power conversion units through pulse width modulation (PWM), wherein the control unit individually controls the pulse width of output signals of the switching unit of each of the plurality of power conversion units.

In addition, the control unit may ensure that switching frequencies of the output signals of the switching unit of each of the plurality of power conversion units are identical, and phase differences between the output signals of the switching unit of each of the plurality of power conversion units have a preset phase difference.

In addition, the phase differences between the output signals of the switching unit of each of the plurality of power conversion units may vary according to the number of power conversion units included in the plurality of power conversion units.

In addition, the phase differences between the output signals of the switching unit of each of the plurality of power conversion units may be set as a difference between centers of pulse widths of the output signals of the switching unit of each of the plurality of power conversion units.

In addition, the plurality of power conversion units include a first power conversion unit and a second power conversion unit, and a phase difference between an output signal of a switching unit of the first power conversion unit and an output signal of a switching unit of the second power conversion unit may be 90 degrees.

In addition, the switching unit of each of the plurality of power conversion units includes one or more upper switches and one or more lower switches connected in series to complementarily conduct, and a pulse width of the output signal of the switching unit of each of the plurality of power conversion units may vary according to a duty value of the upper switches.

In addition, the power conversion device may include a plurality of first monitoring units measuring at least one of an output voltage, an output current, and output power of each of the plurality of power conversion units.

In addition, the power conversion device may include a plurality of second monitoring units measuring at least one of an input voltage, an input current, and input power of each of the plurality of power conversion units.

In addition, the power conversion device may include a plurality of first monitoring units measuring at least one of an output voltage, an output current, and output power of each of the plurality of power conversion units; and a plurality of second monitoring units measuring at least one of an input voltage, an input current, and input power of each of the plurality of power conversion units.

In addition, each of the plurality of power conversion units may include a switching unit receiving a DC voltage and converting the DC voltage into an AC voltage to be output; a resonance unit converting an output of the switching unit using resonance; a transformer unit converting an output of the resonance unit; and a rectifier unit rectifying an output of the transformer unit into a DC voltage.

In addition, each of the plurality of power conversion units may include a resonance-type LLC converter.

In addition, the control unit may control the pulse width of the output signal of the switching unit of each of the plurality of power conversion units so that each output power outputted from the plurality of power conversion units is identical.

### [Advantageous Effects]

According to embodiments of the present invention, outputs between a plurality of power conversion units connected in parallel can be balanced. In addition, ripples can be reduced by identically controlling switching frequencies of the plurality of power conversion units.

### [Brief Description of Drawings]

FIG. 1 illustrates a power conversion device according to an embodiment of the present invention.
FIGS. 2 to 8 are diagrams for explaining an operation of a power conversion device according to an embodiment of the present invention.
FIGS. 9 to 13 are circuit implementation examples of a power conversion device according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the embodiments of the present invention are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

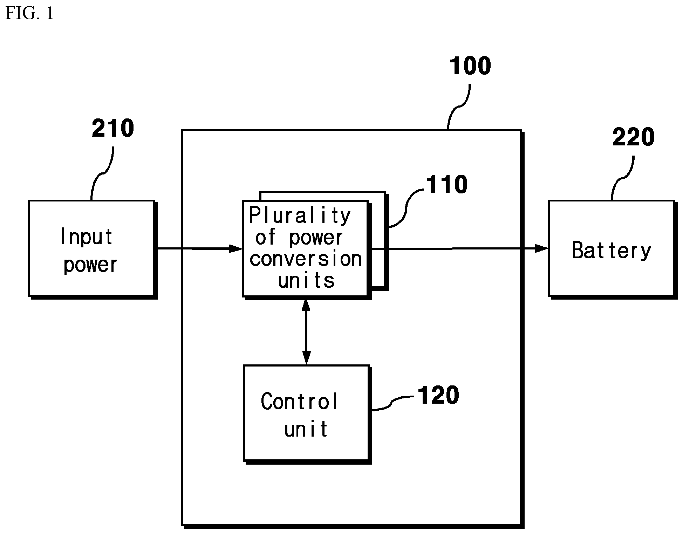

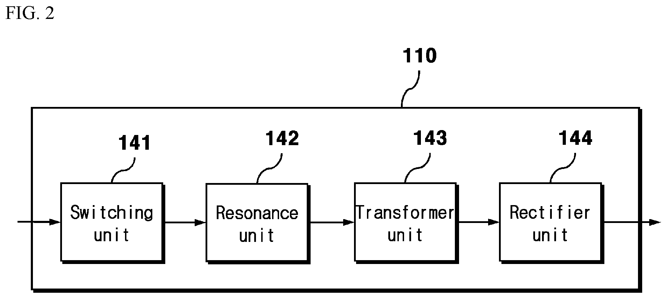

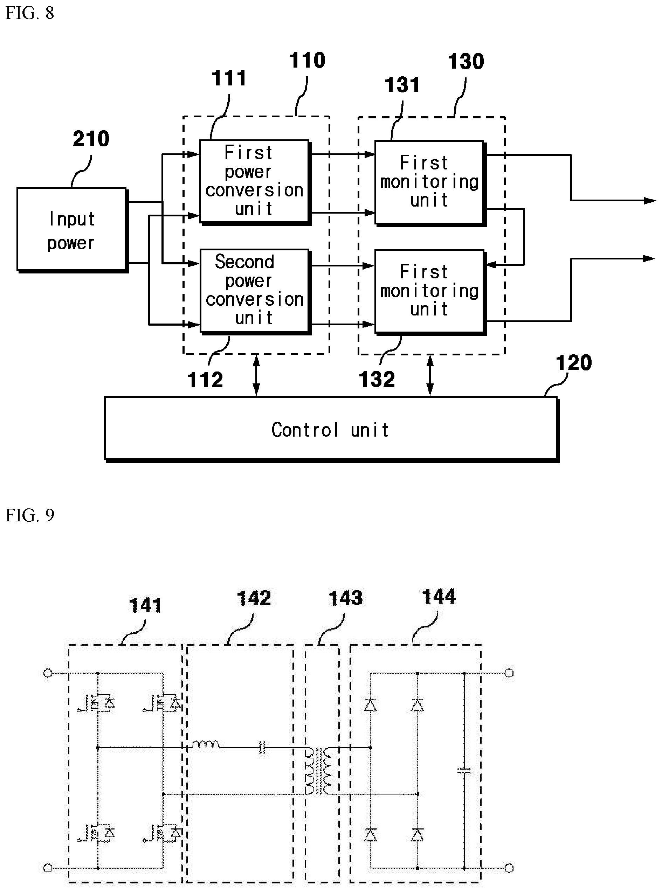

FIG. 1 illustrates a power conversion device according to an embodiment of the present invention. FIGS. 2 to 8 are diagrams for explaining an operation of a power conversion device according to an embodiment of the present invention, and FIGS. 9 to 13 are circuit implementation examples of a power conversion device according to an embodiment of the present invention.

A power conversion device **100** according to an embodiment of the present invention is composed of a plurality of power conversion units **110** and a control unit **120**, and may include a monitoring unit.

A power conversion device **100** according to an embodiment of the present invention may be a power conversion device of an electric vehicle charging apparatus. Here, the power conversion device **100** may be a power module of the electric vehicle charging apparatus. The power module may receive AC power from a grid (50/60Hz) and convert it into DC power for charging an electric vehicle battery to be output. Alternatively, it may receive DC power from an energy storage system (ESS) and convert it into DC power for charging a battery to be output. Power may be received from an external power source such as a solar power generation module. The power module may include an AC-DC rectifier and a DC-DC converter, and the power conversion device **100** according to an embodiment of the present invention is an isolated DC-DC converter and may be a resonant LLC converter. In addition, it may include a CLLC resonant converter or a dual active bridge (DAB) converter, or may include a buck converter, a boost converter, or a buck-boost converter among non-isolated DC-DC converters.

A plurality of power conversion units **110** are connected in parallel, and each may include a switching unit **141**. The plurality of power conversion units **110** are connected in parallel to receive, convert, and output input power **210**. The input power **210** may be an output of an AC-DC rectifier. The AC-DC rectifier may output AC power being inputted from the outside as DC power. The input power **210** that has been received may be converted into a square wave form through the switching unit **141**.

Each power conversion unit **110** may include a switching unit **141**, a resonance unit **142**, a transformer unit **143**, and a rectifier unit **144**. Each power conversion unit **110** may include a resonance-type LLC converter, and as shown in FIG. **2**, the switching unit **141**, the resonance unit **142**, the transformer unit **143**, and the rectifier unit **144** may be connected in this order. The input power **210** is delivered through the switching unit **141**, the resonance unit **142**, the transformer unit **143**, and the rectifier unit **144** and is outputted to a battery **220** being connected to an output side to charge the battery **220**.

The switching unit **141** may convert the input DC voltage being inputted, which is the input power, into a square-wave AC voltage and output it to the resonance unit **142**. The resonance unit **142** may convert the voltage and current, which are the outputs of the switching unit **141**, into AC voltage and AC current using resonance before they are applied to the transformer unit **143**. The frequency of the resonance circuit of the resonance unit **142** is adjusted to match the switching frequency of the switching unit **141**, allowing the switches of the switching unit **141** to be turned on and off at zero voltage or zero current, thereby reducing switching losses and improving efficiency. The transformer unit **143** may convert the voltage or current being inputted from the resonance unit **142** and output it to the rectifier unit **144**. The rectifier unit **144** may rectify the AC voltage or current being inputted from the transformer unit **143** to output DC power.

Switching losses can be reduced by using the resonance of the resonance unit **142**; however, when using a plurality of power conversion units **110** connected in parallel, a difference in output may occur due to tolerances of elements constituting a resonance circuit of the resonance unit **142** of each power conversion unit. Due to this, an imbalance in output between the plurality of power conversion units **110** may occur, leading to decreased efficiency and potential failure caused by a load being concentrated on a specific power conversion unit **110**.

The control unit **120** may perform pulse width modulation (PWM) control on the plurality of power conversion units **110**. The control unit **120** may individually control the pulse width of an output signal of the switching unit **141** of each of the plurality of power conversion units **110**. The control unit **120** may individually control the pulse width of a square wave being outputted from the switching unit **141** for each power conversion unit **110**.

The switching unit **141** may include one or more upper switches and one or more lower switches that are connected in series and conduct complementarily. The pulse width of the output signal of the switching unit **141** of each of the plurality of power conversion units **110** may vary according to a duty value of the upper switch. The control unit **120** may control the pulse width of the square wave being outputted from the switching unit **141** by controlling the duty of the switching unit **141**.

When controlled with the same pulse width, output may vary for each power conversion unit **110**, which may cause an imbalance in output; the control unit **120** may control the outputs between the power conversion units to be identical by decreasing the pulse width of a power conversion unit having a large output, increasing the pulse width of a power conversion unit having a small output, or both decreasing the pulse width of a power conversion unit having a large output and increasing the pulse width of a power conversion unit having a small output. Through this, the imbalance in output between the plurality of power conversion units **110** can be resolved.

The control unit **120** may control switching frequencies of the output signals of the switching units **141** of the plurality of power conversion units **110** to be the same, and may control phase differences between the output signals of the switching units **141** of the plurality of power conversion units **110** to have a preset phase difference.

The switching frequency of a square wave may be measured as a frequency between rising edges or between falling edges, and a phase difference between square waves may be measured as a phase between centers of pulse widths of the respective square waves.

When a switching operation of the switching unit **141** occurs, a ripple in which an output voltage fluctuates may occur, and when a plurality of power conversion units **110** are used, the ripple may increase. In order to reduce the ripple, the control unit **120** may control switching frequencies of the respective switching units **141** of the plurality of power conversion units **110** to be the same and control a phase difference to have a preset phase difference.

The phase difference between the output signals of the switching units of each of the plurality of power conversion units **110** may vary depending on the number of power conversion units included in the plurality of power conversion units **110**. To reduce ripples, the plurality of power conversion units **110** may be controlled to include times when turn-on times do not overlap. For example, they may operate in an interleaving manner. In this case, the phase difference may be set to a value obtained by dividing 180 degrees by the number of power conversion units included in the plurality of power conversion units **110**. For example, when the number of power conversion units included in the plurality of power conversion units **110** is two, the phase difference between the switching units **141** of the two power conversion units **110** may be set to 180/2=90 degrees, and when the number of power conversion units included in the plurality of power conversion units **110** is three, the phase difference between the switching units **141** of the three power conversion units **110** may be set to 180/3=60 degrees.

Here, the phase difference between the output signals of the switching units **141** of each of the plurality of power conversion units **110** may be set as a difference between centers of the pulse widths of the output signals of the switching units **141** of each of the plurality of power conversion units **110**.

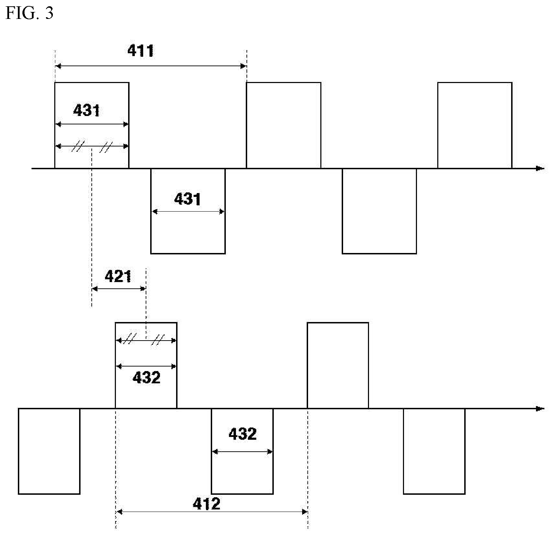

When the plurality of power conversion units **110** include two power conversion units, a first power conversion unit **111** and a second power conversion unit **112**, a phase difference between an output signal of a switching unit **141** of the first power conversion unit **111** and an output signal of a switching unit **141** of the second power conversion unit **112** may be 90 degrees. The square waves being outputted from each switching unit **141** may be as shown in FIG. 3, and the control unit **120** may individually control each switching unit **141** to have a specific pulse width for the square wave being outputted from each switching unit **141**. A pulse width **431** of the first power conversion unit **111** having a low output may be controlled to be large, and a pulse width **432** of the second power conversion unit **112** having a high output may be controlled to be small. At this time, a switching frequency **411** of the first power conversion unit **111** and a switching frequency **412** of the second power conversion unit **112** are controlled to be the same, and a phase difference **421** between the centers of the pulse widths of the two power conversion units **110** may be controlled to be 90 degrees. Through this, the imbalance in output between the power conversion units can be resolved and ripples can be reduced.

A monitoring unit may be included to determine an imbalance in output among the plurality of power conversion units **110**. The monitoring unit may measure at least one of voltage, current, and power. The monitoring unit may include at least one of a voltage sensor and a current sensor. The control unit **120** may use values measured by the monitoring unit to perform control so that the measured values reach target values. At this time, the control unit **120** may control the pulse width of the output signal of the switching unit **141** of each power conversion unit **110** by using the measured values.

The monitoring unit may include a first monitoring unit **130** connected to an output terminal of the power conversion unit, include a second monitoring unit **150** connected to an input terminal of the power conversion unit, or include both the first monitoring unit **130** connected to the output terminal of the power conversion unit and the second monitoring unit **150** connected to the input terminal of the power conversion unit.

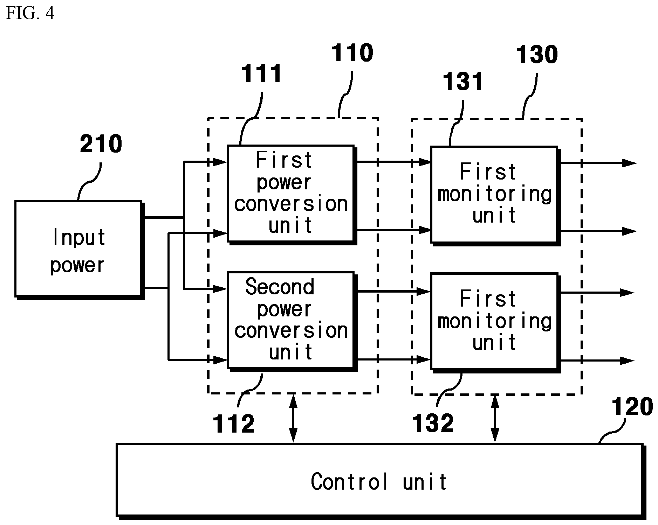

The first monitoring unit **130** may measure at least one of output voltage, output current, and output power of each of the plurality of power conversion units **110**. As shown in FIG. 4, the first monitoring units **131** and **132** are respectively connected to output terminals of each power conversion unit **110** to measure the output voltage, output current, and output power and deliver them to the control unit **120**. The control unit **120** may determine an output imbalance using the delivered output power of each power conversion unit **110**, and may individually control the pulse width of the output signal of the switching unit **141** of each power conversion unit **110** using the delivered output power of each power conversion unit **110**.

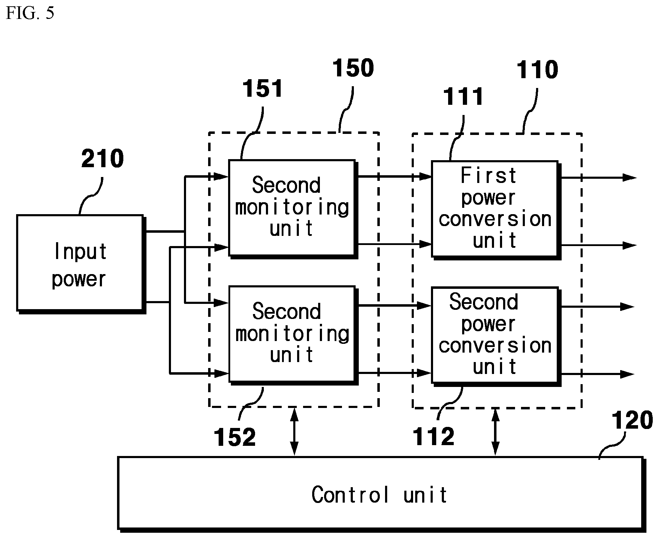

The second monitoring unit **150** may measure at least one of input voltage, input current, and input power of each of the plurality of power conversion units **110**. As shown in FIG. 5, the second monitoring units **151** and **152** are respectively connected to input terminals of each power conversion unit **110** to measure the input voltage, input current, and input power and deliver them to the control unit **120**. The control unit **120** may determine an output imbalance using the delivered input power of each power conversion unit **110**, and may individually control the pulse width of the output signal of the switching unit **141** of each power conversion unit **110** using the delivered input power of each power conversion unit **110**.

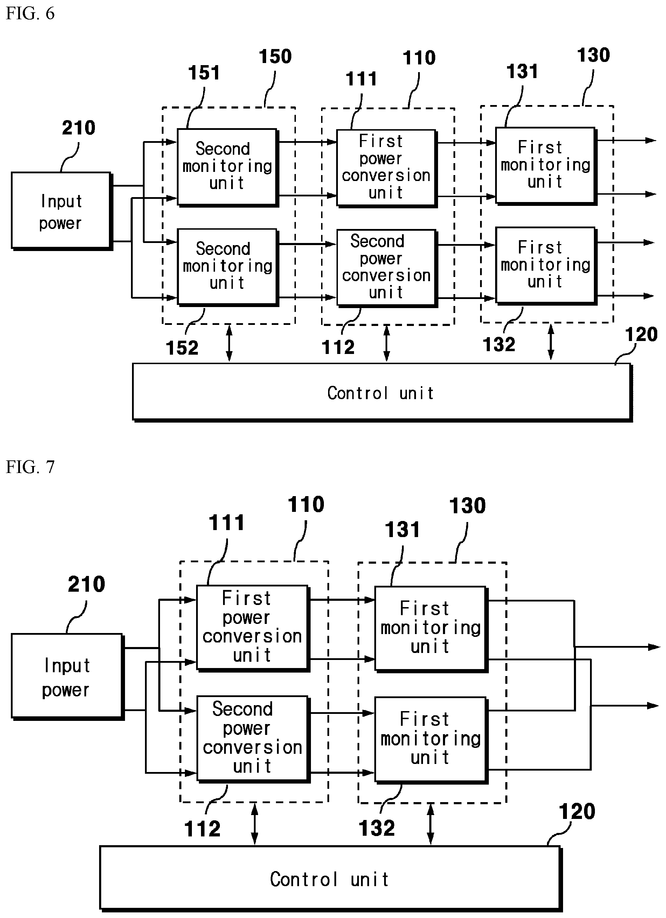

In addition, both the first monitoring unit **130** and the second monitoring unit **150** may be included. As shown in FIG. 6, the first monitoring units **131** and **132** may be connected to output terminals of each power conversion unit **110** to measure and deliver the output voltage, output current, and output power to the control unit **120**, and the second monitoring units **151** and **152** may be connected to input terminals of each power conversion unit **110** to measure and deliver the input voltage, input current, and input power to the control unit **120**. By using both the first monitoring unit **130** and the second monitoring unit **150**, it is possible to distribute measurement functions or verify the accuracy of the measured information. The control unit **120** may determine an output imbalance using the delivered input power of each power conversion unit **110**, and may individually control the pulse width of the output signal of the switching unit **141** of each power conversion unit **110** using the delivered input power of each power conversion unit **110**.

The control unit **120** may control the pulse width of the output signal of the switching unit **141** of each of the plurality of power conversion units **110** such that each output power being outputted from the plurality of power conversion units **110** is identical.

The outputs of the plurality of power conversion units **110** having inputs connected in parallel may be connected in parallel or in series. As shown in FIG. 7, the inputs of the first power conversion unit **111** and the second power conversion unit **112** may be connected in parallel, and the outputs thereof may also be connected in parallel. Each of the first power conversion unit **111** and the second power conversion unit **112** may receive power from the input power source **210**, convert the power into a rated voltage of a battery **220**, which is a load, and output the converted voltage.

In addition, as shown in FIG. 8, inputs of the first power conversion unit **111** and the second power conversion unit **112** may be connected in parallel, and outputs thereof may be connected in series. Each of the first power conversion unit **111** and the second power conversion unit **112** receives and outputs power from the input power source **210**, and the respective outputs are connected in series and summed to be outputted according to a rated voltage of a battery **220**, which is a load. When a voltage being outputted from each power conversion unit **110** is lower than the rated voltage of the battery **220**, the two outputs may be summed in series to match the rated voltage of the battery **220**.

In a state where the outputs of the first power conversion unit **111** and the second power conversion unit **112** are connected in parallel, when the output of the first power conversion unit **111** and the output of the second power conversion unit **112** are unequal, the control unit **120** may control the outputs between the power conversion units to be identical by decreasing a pulse width of a power conversion unit having a large output, increasing a pulse width of a power conversion unit having a small output, or both decreasing the pulse width of the power conversion unit having the large output and increasing the pulse width of the power conversion unit having the small output. Through this, an imbalance in output between the first power conversion unit **111** and the second power conversion unit **112** can be resolved.

In a state where the outputs of the first power conversion unit **111** and the second power conversion unit **112** are connected in series, when the output of the first power conversion unit **111** and the output of the second power conversion unit **112** are unequal, the control unit **120** may control the outputs between the power conversion units to be identical by increasing a pulse width of a power conversion unit having a small output. Through this, in modulating the pulse width to resolve the imbalance in output between the first power conversion unit **111** and the second power conversion unit **112**, it is possible to prevent the final output voltage from becoming lower than the rated voltage of the battery **220** by avoiding a reduction in the pulse width.

Within a range that forms the rated voltage of the battery **220**, the control unit may control the outputs between the power conversion units to be identical by decreasing a pulse width of a power conversion unit having a large output, increasing a pulse width of a power conversion unit having a small output, or both decreasing the pulse width of the power conversion unit having the large output and increasing the pulse width of the power conversion unit having the small output. Through this, an imbalance in output between the first power conversion unit **111** and the second power conversion unit **112** can be resolved.

Each power conversion unit **110** may be configured as shown in FIG. 9. It may include a switching unit **141** including a plurality of switches, a resonance unit **142** constituting a resonance circuit, a transformer unit **143** for converting voltage, and a rectifier unit **144** for rectifying an output of the transformer unit **143**.

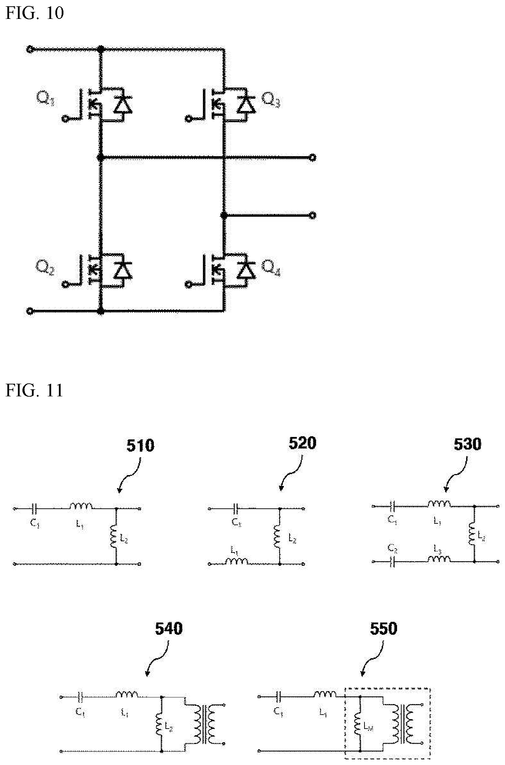

The switching unit **141** may be implemented as a full-bridge circuit using four switching elements **Q1** to **Q4**, as shown in FIG. 10. As for the switching elements **Q1** to **Q4**, semiconductor switching elements such as Si, SiC, or GaN based elements may be used. The control unit **120** may control the pulse width of an output signal by performing PWM control on the duty of **Q1** and **Q3**.

The resonance unit **142** may configure an LLC resonance circuit in various ways, as shown in FIG. 11. The resonance circuit may be configured by connecting an inductor and a capacitor in series, and may include at least two inductors (LL) and at least one capacitor (C). As shown in **510** and **520**, the connection order or connection state of the elements may vary, and as shown in **530**, the number of elements may be increased. In addition, as shown in **540**, at least one of the inductors used in the resonance circuit may be connected in parallel with the transformer unit **143**. At this time, as shown in **550**, the inductor connected in parallel with the transformer unit **143** may be replaced with a magnetizing inductance of the transformer unit **143**.

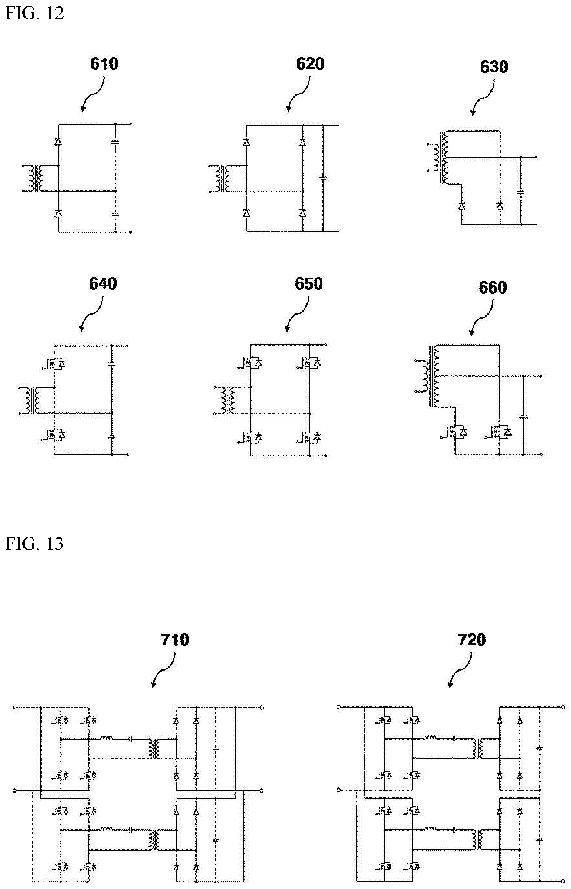

The secondary circuit and the rectifier unit of the transformer unit **143** may be configured in various ways, as shown in FIG. 12. The rectifier unit **144** may be implemented as a current doubler **610**, a full-wave rectifier **620**, or a center-tapped full-wave rectifier **630**. The diodes of the rectifier units **144** in **510** to **530** may be replaced with semiconductor switching elements, as in the rectifier units **144** of **540** to **560**, and power can be transmitted in both directions when semiconductor switches are used. As for the semiconductor switches, Si, SiC, or GaN based elements may be used.

When two resonant LLC converters are used, a circuit configuration as shown in FIG. 13 is possible. While the inputs are connected in parallel, the outputs may be connected in parallel as shown in **710** or connected in series as shown in **720**.

Those of ordinary skill in the art to which the present embodiment pertains will understand that the embodiment may be implemented in modified forms without departing from the essential characteristics of the above description. Therefore, the disclosed methods should be considered from an explanatory perspective rather than a restrictive one. The scope of the present invention is defined by the claims rather than the foregoing description, and all differences within the equivalent scope should be interpreted as being included in the present invention.

## Claims

1. A power conversion device comprising:
a plurality of power conversion units connected in parallel, each including a switching unit; and
a control unit configured to control the plurality of power conversion units through pulse width modulation (PWM),
wherein the control unit individually controls a pulse width of output signal of the switching unit of each of the plurality of power conversion units.

2. The power conversion device according to claim 1,
wherein the control unit controls switching frequencies of the output signals of the switching units of the plurality of power conversion units to be identical, and controls a phase difference between the output signals of the switching units of the plurality of power conversion units to have preset phase difference.

3. The power conversion device according to claim 2,
wherein the phase difference between the output signals of the switching units of the plurality of power conversion units varies according to the number of power conversion units included in the plurality of power conversion units.

4. The power conversion device according to claim 3,
wherein the phase difference between the output signals of the switching units of the plurality of power conversion units is set as a difference between centers of the pulse widths of the output signals of the switching units of the plurality of power conversion units.

5. The power conversion device according to claim 2,
wherein the plurality of power conversion units comprise a first power conversion unit and a second power conversion unit, and
wherein the phase difference between an output signal of a switching unit of the first power conversion unit and an output signal of a switching unit of the second power conversion unit is 90 degrees.

6. The power conversion device according to claim 1,
wherein the switching unit of each of the plurality of power conversion units includes one or more high-side switches and one or more low-side switches connected in series to be complementarily conductive, and
wherein the pulse width of the output signal of the switching unit of each of the plurality of power conversion units varies according to a duty value of the high-side switch.

7. The power conversion device according to claim 1, comprising:
a plurality of first monitoring units configured to measure at least one of an output voltage, an output current, and an output power of each of the plurality of power conversion units.

8. The power conversion device according to claim 1, comprising:
a plurality of second monitoring units configured to measure at least one of an input voltage, an input current, and an input power of each of the plurality of power conversion units.

9. The power conversion device according to claim 1, comprising:
a plurality of first monitoring units configured to measure at least one of an output voltage, an output current, and an output power of each of the plurality of power conversion units; and
a plurality of second monitoring units configured to measure at least one of an input voltage, an input current, and an input power of each of the plurality of power conversion units.

10. The power conversion device according to claim 1, wherein each of the plurality of power conversion units comprises:
a switching unit configured to receive a DC voltage and convert the DC voltage into an AC voltage to output the AC voltage;
a resonance unit configured to convert an output of the switching unit using resonance;
a transformer unit configured to convert an output of the resonance unit; and
a rectifier unit configured to rectify an output of the transformer unit into a DC voltage.
